# EUROPEAN PATENT APPLICATION

(11) **EP 4 831 863 A1**
(43) Date of publication of application: **28.10.2026**
(21) Application number: 26156668.1
(22) Date of filing: 05.02.2026
(51) Int. Cl.: G06K 7/10

(54) **PROGRAMMABLE HANDHELD SCANNER FOR INDUSTRIAL LOGISTICS APPLICATIONS**

(30) Priority: 13.02.2025 BE 202505084
(71) Applicant: Get Your Way, 4340 Awans (BE)
(72) Inventor: DESSAMBRE, Nicolas, 4000 Liège (BE); JENCHENNE, Pierre, 4950 Sourbrodt (BE); MALHERBE, Antoine, 4340 Awans (BE)
(74) Representative: Calysta NV

(57) **Abstract**

A programmable modular keypad system (300) for integration with a traceability system in industrial logistics environments comprises a housing (100) enclosing a stacked PCB interconnecting a processing unit, a power management module with autonomous and external power options, a wireless communication module for network connectivity, a scanning module for capturing identification data, and a modular keypad matrix with customizable keys for interface, communication, control, and advanced operations, wherein the processing unit processes and transmits identification data to the traceability system based on predefined functions.

## Description

### Technical Field

The present invention relates to the field of portable IoT devices intended for industrial environments. More specifically, it relates to an ergonomic handheld scanner featuring a programmable keypad, designed to optimize human-machine interaction (HMI) in data-intensive sectors such as logistics.

### Prior art

It is known in the prior art that handheld scanners, industrial phones, and PDAs are commonly used for data collection and logistical operations in industrial environments. However, these devices often suffer from limitations such as bulky designs, restricted functionality, limited battery life, and inadequate ergonomics, which can hinder workflow efficiency and increase operator fatigue.

US5514861A describes a glove-mounted scanner system but has several drawbacks. It may reduce comfort and flexibility, leading to operator fatigue. Durability is a concern in industrial settings due to exposure to dust and moisture. The fixed scanner position limits adaptability, and high-power consumption may require frequent recharging, disrupting workflows.

EP1406205 describes a portable optical scanning and pointing system but has several drawbacks. Its design may be bulky or ergonomically limiting for extended use. Precision and stability could be compromised by hand movement, affecting scanning accuracy. Additionally, power consumption may lead to frequent recharging, disrupting workflows. The system's complexity may also increase costs and maintenance requirements, limiting its practicality in industrial environments.

US6688526B2 describes a barcode reader with a clip for user attachment but has several drawbacks. Its fixed positioning may limit scanning flexibility and efficiency. The clip mechanism might not provide a secure fit, leading to discomfort or device instability during movement. Additionally, prolonged wear could cause strain or interfere with other tasks. The design may also compromise battery life and durability in demanding industrial environments, requiring frequent maintenance or recharging.

US5305181A describes an arm- or wrist-mounted terminal with a flexible housing but has several drawbacks. Wearing a device on the arm or wrist for extended periods may cause discomfort and restrict movement. The added weight could lead to operator fatigue, especially in physically demanding environments. The flexible housing, while intended to improve comfort, may compromise durability and protection against industrial hazards like dust and impact. Additionally, screen visibility and interaction could be challenging, requiring frequent adjustments that slow down workflow efficiency.

Existing wearable and handheld scanner systems have several drawbacks that limit their effectiveness in industrial environments. Glove-mounted and wrist-worn designs can cause discomfort, restrict movement, and lead to operator fatigue over time. Additionally, hygiene issues arise when sharing gloves between operators, requiring frequent cleaning or replacements to avoid contamination. The need for gloves of various sizes, as well as left- and right-handed configurations, further complicates usability and increases operational inefficiency. Clip-on and modular systems often lack stability, making them prone to misalignment, accidental detachment, or reduced scanning accuracy. Many of these devices are also directional, meaning they can only be used in a fixed orientation, reducing flexibility for different tasks and work environments. Frequent handling or adjustments further slow down workflows and increase strain on users. Additionally, high power consumption leads to frequent recharging, disrupting operations. Furthermore, flexible housings and modular constructions may compromise durability, making these devices more vulnerable to dust, moisture, and mechanical stress, ultimately increasing maintenance requirements and reducing long-term reliability. Finally, another significant drawback of existing devices is their difficulty in seamlessly integrating into various industrial workflows.

### Summary of the invention

It is the object of the invention to provide a programmable handheld scanner with a modular and connected keypad that overcomes the limitations of existing wearable and handheld scanner systems. The invention aims to improve ergonomics, flexibility, and efficiency by offering a lightweight, adaptable design that reduces operator fatigue and allows for multi-directional use. By integrating wireless connectivity, customizable programming, and an optimized power management system, the device enhances workflow efficiency and ensures reliable performance in demanding industrial environments. Additionally, the modular keypad allows for intuitive human-machine interaction, improving usability across various applications such as logistics, quality control, and order fulfilment.

According to the invention, this object is solved by the programmable modular keypad system according to the first claim, configured for integration with a traceability system to manage and enhance the traceability and identification of items within an industrial logistics environment, the programmable keypad system comprising:
- a housing enclosing a printed circuit board, PCB, operatively coupling modules via a processing unit, the modules comprising:
- a power management module comprising an internal power source for autonomous operation and/or a power interface for connection to an external power source;
- a wireless communication module configured to establish connectivity with the traceability system and/or other networked devices via wireless protocols;
- a scanning module configured to capture identification data associated with the items;
- the processing unit configured to:
   ∘ process the identification data captured by the scanning module;
   ∘ map the captured data to corresponding actions; and
   ∘ transmit the corresponding actions to the traceability system; wherein the housing further comprises:
- a modular keypad matrix comprising a predefined number of customizable keys, each key configurable to perform programmable functions associated with the traceability system, the functions comprising interface functions, wireless communication functions, device control functions, and/or advanced operation functions.

A traceability system is essential for managing and enhancing the tracking of items within an industrial logistics environment. In modern supply chains, the ability to monitor the movement of goods in real-time ensures greater efficiency, reduces errors, and improves overall workflow coordination. Such a system enables organizations to track an item's journey from production to final delivery, providing crucial visibility that helps streamline logistics operations. By integrating various technologies such as barcode scanning, RFID, IoT sensors, and cloud-based data management, businesses can achieve a higher level of control over their inventory and logistics processes. It can go from interacting with highly complex systems, like an enterprise resource planning, ERP, system or a warehouse management system, WMS, to handling a task like filling out a spreadsheet file.

One of the primary advantages of an advanced traceability system is the ability to capture and process real-time data on each item's status, location, and movement. By implementing automated scanning and data logging solutions, industrial logistics environments can significantly reduce these inefficiencies. The use of barcode or RFID-based tracking allows for quick and accurate identification of goods at various checkpoints, ensuring that each item is accounted for throughout the supply chain.

Connectivity plays a crucial role in enhancing traceability, particularly through the integration of IoT-enabled sensors and wireless communication. These enable continuous monitoring, providing instant updates on the condition and positioning of items. For example, in industries dealing with perishable goods or sensitive materials, real-time environmental monitoring ensures that storage conditions meet regulatory and quality standards. In the case of unexpected delays or deviations, alerts can be generated automatically, allowing for immediate corrective action.

Furthermore, an effective traceability system improves compliance with regulatory requirements and industry standards. Many industries, including pharmaceuticals, food production, and automotive manufacturing, have strict guidelines regarding the documentation and tracking of materials. A robust traceability framework ensures that all necessary records are maintained, allowing businesses to demonstrate compliance and respond quickly to audits or recalls if necessary. This level of control not only enhances operational transparency but also builds trust with customers and regulatory bodies.

The claimed programmable modular keypad system is a key element within a traceability system as discussed above, providing an innovative solution for improving traceability in industrial logistics. By integrating advanced technical components into a cohesive and adaptable design, it enhances both functionality and efficiency. The following sections will further detail its key technical features.

The system comprises a robust housing that encloses a PCB designed to optimize space while ensuring structural integrity. The PCB is for example a stacked PCB. Within this housing, the PCB serves as the central platform, operatively coupling multiple functional modules through a processing unit that manages data flow and system operations. The integrated modules include a power management module, a wireless communication module, a scanning module, and a modular keypad matrix, which is also considered to be a module. In other words, the processing and modules are also enclosed by the housing.

The power management module is designed to ensure operational reliability and flexibility in varying industrial scenarios. It incorporates both an internal power source, enabling autonomous operation in environments without immediate access to external power, and a power interface, allowing connection to external power sources when available. This dual capability ensures that the keypad system can operate consistently under different power conditions, reducing downtime and enhancing reliability. The power interface is further configured to charge the internal power source.

The inclusion of a wireless communication module facilitates seamless integration with traceability systems and other networked devices. By supporting wireless protocols such as Wi-Fi or Bluetooth, the module enables real-time data exchange, ensuring that the system remains connected to centralized databases or cloud services of the traceability system. This feature is particularly critical in dynamic industrial settings, where wired connections may be impractical.

The scanning module is a core component for data acquisition, allowing the system to capture identification data from items using technologies such as barcode scanning, RFID, or QR code recognition. It should therefore be understood that the scanning module can be a scanner equipped with an image sensor for decoding QR codes and similar data, but also a module having RFID functionality likewise to capture data. This captured data serves as the foundation for traceability, enabling accurate tracking and management of items throughout the logistics chain. To this end, the scanning module comprises a scanning device, such as an optical scanner for capturing visible light, an RFID receiver for reading radio-frequency tags, or any other suitable hardware for data acquisition.

The processing unit acts as the system's computational core, coordinating the interactions between the modules. It processes the identification data captured by the scanning module, maps the data to corresponding programmable actions, and transmits the resulting outputs to the traceability system. This functionality ensures seamless integration between the physical keypad system and the digital traceability platform, enabling efficient and automated workflows.

The modular keypad matrix is a customizable interface that allows users to configure a predefined number of keys to perform various programmable functions. The configuration can for example be performed wirelessly by Bluetooth through a user-friendly application on a mobile device. These functions include interface commands (e.g., navigation controls or shortcut keys), wireless communication functions (e.g., triggering data transmissions or application programming interface, API, requests), device control functions (e.g., media playback or device interaction), and advanced operations (e.g., pointer movements or complex macro execution). This adaptability makes the keypad system suitable for diverse use cases within the industrial logistics domain.

This programmable modular keypad system is a comprehensive solution tailored for industrial logistics environments. Its combination of power flexibility, wireless connectivity, data acquisition, advanced processing capabilities, and customizable user interfaces positions it as a robust tool for managing and enhancing traceability. By integrating these features into a cohesive design, the system addresses the challenges of modern industrial operations, such as scalability, reliability, and adaptability.

The modular keypad matrix is a critical component of the programmable modular keypad system, designed to enhance usability and adaptability within industrial logistics environments. As already mentioned, it comprises a predefined number of customizable keys, each of which can be individually configured to execute specific programmable functions. This flexibility allows operators to tailor the device's functionality to suit their unique workflow requirements, improving efficiency, accuracy, and ease of use in traceability applications.

One of the primary advantages of this modular keypad matrix is its ability to support interface functions, primarily by interaction with a remote display for presenting context-specific information, which is dynamically adjusted based on the data read by the handheld scanner. These functions include standard user interactions such as menu navigation, data entry, and confirmation of scanned or processed information. The keypad allows for quick execution of frequently used commands, reducing the need for complex touchscreen interactions or additional peripheral input devices. This improves operational speed, particularly in environments where workers must process high volumes of data in real-time.

In addition to basic interface functions, the keypad integrates wireless communication functions, enabling seamless connectivity with industrial networks. Operators can trigger wireless data transmission, initiate synchronization with cloud-based traceability platforms, or switch between different communication protocols such as Wi-Fi, Bluetooth, or NFC. This ensures continuous real-time updates within the traceability system, reducing delays in inventory tracking, asset management, and logistical coordination.

The keypad also supports device control functions, allowing users to manage various hardware aspects of the scanner efficiently. These functions may include adjusting screen brightness at the connected remote screen, toggling power modes to optimize battery life, or switching between scanning modes based on operational needs. By integrating these controls directly into the keypad, the device minimizes downtime associated with navigating through software menus, enhancing productivity and user convenience.

For more complex operations, the modular keypad can execute advanced operation functions. These may include launching pre-programmed workflows, performing batch scanning, automating data processing tasks, or interacting with enterprise resource planning (ERP) and warehouse management systems (WMS). The ability to assign these specialized functions to dedicated keys simplifies operational processes and ensures that critical traceability tasks can be performed with minimal effort and error risk.

By incorporating a predefined yet configurable key structure, the modular keypad matrix provides a balance between standardization and adaptability. Industrial users can customize the keypad layout according to their specific operational needs, ensuring that the scanner remains versatile across different use cases.

In summary, the modular keypad matrix enhances the scanner's usability, efficiency, and adaptability, making it an essential tool for traceability in industrial logistics. Its customizable nature supports a wide range of interface, communication, control, and advanced operational functions, ensuring seamless interaction between the operator and the traceability system.

According to an embodiment, the housing of the programmable modular keypad further comprises a slot configured to accommodate a removable membrane keyboard compatible with the modular keypad matrix.

This dedicated slot is designed to accommodate a removable membrane keyboard that is fully compatible with the modular keypad matrix. This feature enhances the adaptability of the device, allowing users to modify or expand its input functionality based on specific operational needs within an industrial logistics environment.

The removable membrane keyboard provides a practical solution for applications that require a more extensive or specialized input interface. Unlike conventional fixed keypads, this modular approach enables operators to swap different membrane keyboards depending on their workflow requirements. For instance, users in a warehouse setting might require a standard numeric keypad for inventory input, while operators in quality control may need specialized function keys dedicated to specific scanning or verification tasks. This level of customization ensures that the device remains versatile across various industrial applications.

Furthermore, an automatic recognition element, such as an RFID tag, may be integrated in the removable membrane keyboard. This allows for automatic detection and configuration of the keypad layout during installation, ensuring seamless adjustment of settings and orientation to suit different user preferences.

Another key advantage of this design is durability and hygiene. Industrial environments often expose devices to harsh conditions, including dust, moisture, and contaminants. The membrane keyboard, being sealed and resistant to liquids and debris, offers enhanced protection compared to traditional mechanical keypads. This makes it particularly useful in industries such as food processing, pharmaceuticals, and manufacturing, where cleanliness and device longevity are critical. Additionally, the removable nature of the membrane allows for easy replacement or cleaning, ensuring that the scanner remains functional without the need for extensive maintenance or downtime.

The integration with the modular keypad matrix ensures seamless operation, as the removable membrane keyboard interfaces directly with the underlying modular keypad matrix. This guarantees that all key inputs are processed efficiently, whether the user employs the default keypad or an alternative membrane. The design also allows for hot-swappable functionality, meaning that operators can replace the membrane keyboard without disrupting the system's operation, reducing workflow interruptions.

Furthermore, this feature supports ergonomic improvements, as different membrane configurations can be optimized for user comfort. Industrial workers who operate the device for extended periods can benefit from soft-touch or tactile feedback options, reducing strain and improving efficiency. Additionally, custom layouts with larger keys or high-contrast printing can be developed to enhance accessibility for users working in low-light environments or with protective gloves.

In summary, incorporating a slot for a removable membrane keyboard within the programmable modular keypad's housing significantly enhances the device's customizability, durability, and usability. This design choice ensures that the scanner remains adaptable to various industrial needs while maintaining high performance in challenging environments. By enabling easy replacement, maintenance, and ergonomic adjustments, this feature further strengthens the efficiency and practicality of the traceability system.

According to an embodiment, the slot comprises a receiving surface designed to securely and reversibly attach the removable membrane keyboard. Preferably, it may comprise slide rails designed to guide and support the sliding insertion and removal of the removable membrane keyboard.

In one embodiment, the slot for the removable membrane keyboard is designed with a receiving surface that allows for secure and reversible attachment. This ensures that the membrane keyboard remains firmly in place during operation while still allowing users to detach and replace it when needed. The secure attachment mechanism prevents accidental dislodgment, even in high-intensity industrial environments, where frequent handling and movement could otherwise compromise stability. Alternatively, the slot may incorporate slide rails that guide and support the smooth insertion and removal of the membrane keyboard. This design enhances usability by allowing operators to swap keyboards quickly and precisely, reducing the risk of misalignment or improper attachment. The sliding mechanism ensures consistent positioning and mechanical connectivity with the modular keypad matrix, enabling seamless operation without requiring additional adjustments.

According to an embodiment, the housing further comprises a connection interface positioned on a side opposite the modular keypad matrix, the connection interface being configured to securely and detachably attach to a support.

By positioning the connection interface on the opposite side of the keypad, the design maintains ergonomic efficiency. The modular keypad remains fully accessible while the device is mounted, ensuring smooth operation without obstruction. This setup also facilitates one-handed use, reducing operator strain and improving workflow efficiency. This secure attachment mechanism further ensures that the device remains stable during operation, even in demanding conditions where frequent movements or vibrations occur. This is particularly useful in warehouse, manufacturing, and logistics settings, where operators need quick and easy access to the scanner without having to always hold it. The ability to detach the device, when necessary, also provides flexibility, allowing users to switch between handheld and mounted operation depending on the task at hand.

According to an embodiment, the connection interface further comprises a connection module managed by the power management module and configured to connect to an external power source.

This feature enhances the operational longevity and reliability of the modular keypad system, ensuring continuous functionality in demanding industrial environments where battery life limitations could otherwise disrupt workflows. By integrating a connection module, the keypad system can seamlessly transition between battery-powered and externally powered modes, for example worn by a user. This is particularly useful in settings where prolonged use is required, where frequent recharging interruptions could reduce efficiency. The power management module intelligently regulates power distribution, preventing overcharging and optimizing energy consumption to maintain consistent performance. By enabling external power integration, this design increases device lifespan, reduces downtime, and enhances overall efficiency, making the modular keypad system an ideal solution for industrial applications requiring continuous and reliable operation.

According to an embodiment, the connection interface further comprises a command input interface configured to receive one or more command signals from an external device when attached to the support.

The command input interface enables the device to receive command signals from an external device when attached to a support, as will be further discussed.

According to an embodiment, the connection interface has a symmetrical geometry along at least one axis, wherein the symmetrical geometry enables attachment to the support in two opposite orientations, wherein the connection interface maintains identical functionality in both orientations when attached.

By enabling bidirectional attachment, the modular keypad system can be mounted in the most convenient orientation based on the user's workflow or spatial constraints. The symmetrical design also improves ergonomics by allowing both left- and right-handed users to interact with the device efficiently. This allows to direct the scanner in different orientations thereby enabling better accessibility and adaptability across diverse work environments.

According to a second aspect of the invention a removable membrane keyboard is disclosed comprising keys and configured to by housed by the programmable modular keypad system according to the first aspect of the invention.

The removable membrane keyboard constitutes an independent claim, distinct from but inherently linked to the programmable modular keypad system of the first aspect. Much like plugs and sockets, these two inventions function independently yet are designed to interface seamlessly, ensuring compatibility and enhanced functionality when used together. The modular keypad system provides the structural and electronic framework, while the removable membrane keyboard serves as a customizable input interface, allowing for adaptability across different industrial applications. This relationship ensures that while each component retains standalone utility, their integration offers a versatile and efficient solution for traceability and operational control in industrial environments.

According to an embodiment, the removable membrane keyboard is further configured to adjust the appearance of its keys in accordance with the settings of the customizable keys within the modular keypad matrix.

According to a third aspect, a support device for a wrist is disclosed comprising:
- holding means for a strap to encircle a wearer's wrist and provide a secure fit;
- a support structure mounted on the holding means comprising a receiver configured to establish a physical connection with the connection interface of the programmable modular keypad system according to the first aspect of the invention.

The wrist-mounted support device constitutes an independent claim, distinct from but closely related to the programmable modular keypad system of the first aspect. Just as a docking station enhances the functionality of a laptop, this support device extends the usability of the modular keypad by enabling wearable, hands-free operation. The secure attachment mechanism ensures stability while allowing easy detachment, making the support device a versatile complement to the modular keypad system.

This wearable support solution enhances portability, accessibility, and hands-free operation, making it particularly beneficial in industrial and logistics environments where mobility and efficiency are crucial.

The support device comprises holding means for a strap. The strap is designed to encircle the wearer's wrist, ensuring a secure and comfortable fit during extended use. It provides stability while allowing for natural hand movement, preventing discomfort or obstruction during tasks such as scanning, data entry, or equipment handling. The adjustable nature of the strap ensures that it can accommodate various wrist sizes, making it adaptable for different users in an industrial setting. This adaptability eliminates the need for different support sizes, as the same device can be used across operators. Unlike glove-mounted solutions, the hand remains free, which not only improves hygiene by reducing sweat and contamination risks but also enhances the user's ability to grasp and handle objects freely

The support device houses a receiver for the connection interface of the modular keypad system. This receiver establishes a secure yet detachable physical connection, allowing the keypad system to be easily mounted and removed as needed. By positioning the support structure with the keypad on the wrist, the device remains readily accessible, reducing the need for workers to constantly pick up and put down a handheld scanner or controller. By integrating secure attachment, ergonomic design, and functional adaptability, this wrist-mounted support device expands the usability of the modular keypad system, offering a versatile and user-friendly solution for modern industrial environments.

Since the connection interface has a symmetrical geometry along at least one axis as explained above, the modular keypad system can be mounted on the support device in two distinct directions yet keeping its functionality.

According to an embodiment, the receiver is further configured to interface with an external input module adapted to operate in conjunction with the processing unit of the programmable modular keypad system. The receiver may further comprise a magnetic connector to interface with the external input device.

The support device comprises a receiver that is designed to interface with an external input module, which is configured to interact with the processing unit of the programmable modular keypad system. This receiver may further be adapted to facilitate communication with the external input module, ensuring seamless integration within the system. To this end, the receiver may comprise a magnetic connector, providing a secure and reliable interface for connecting the external input device. This magnetic connection mechanism enhances ease of use by allowing quick attachment and detachment while ensuring a stable electrical or data connection. Such a configuration enables efficient operation of the external input module, which may include components such as control buttons, thereby extending the functionality of the modular keypad system.

According to an embodiment, a kit of parts is disclosed comprising a programmable modular keypad system according to the first aspect, a removeable membrane keyboard according to the second aspect, and a support device according to the third aspect.

### Brief description of the Drawings

Exemplary embodiments of the invention are described using the figures. It is to be understood that these figures merely serve as examples of how the invention can be implemented and are in no way intended to be construed as limiting for the scope of the invention and the claims.
Figure 1 presents a perspective view of the stacked PCB architecture of the programmable modular keypad system, in accordance with an embodiment of the invention.
Figure 2 provides a side view of the stacked PCB architecture as depicted in Figure 1.
Figure 3 illustrates a perspective view of the programmable modular keypad system integrated with a housed membrane keyboard.
Figure 4 offers another perspective view of the programmable modular keypad system, showing the membrane keyboard positioned above the system.
Figure 5 displays a perspective view of the support device according to an embodiment of the invention.
Figure 6 shows a side view of the support device as presented in Figure 5.
Figure 7 illustrates the modular keypad system housed within the support device, according to an embodiment of the invention.
Figure 8 provides an overview of the software architecture of the programmable modular keypad system, in line with an embodiment of the invention.
Figure 9 depicts a user's hand wearing the modular keypad system, which is secured by the support device with a strap around the wrist.
Figure 10 further illustrates the support device with a wrist strap, as shown in Figure 9.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

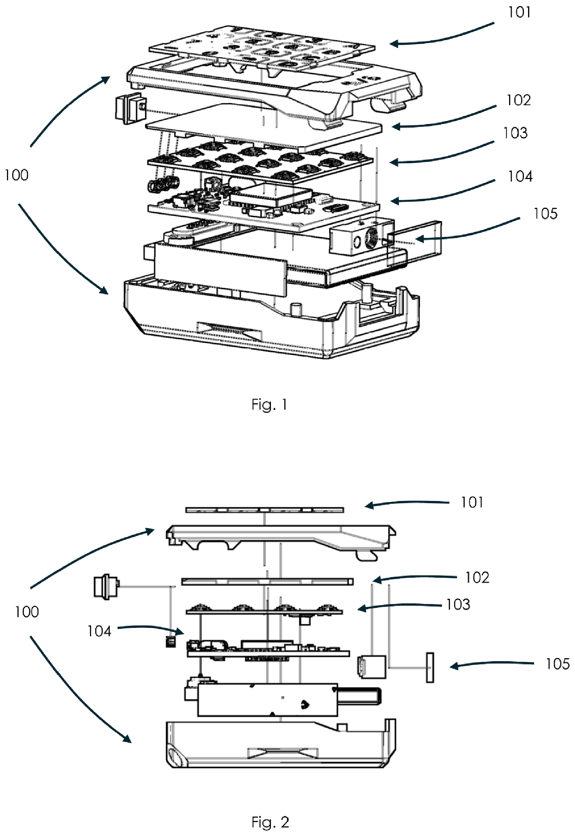

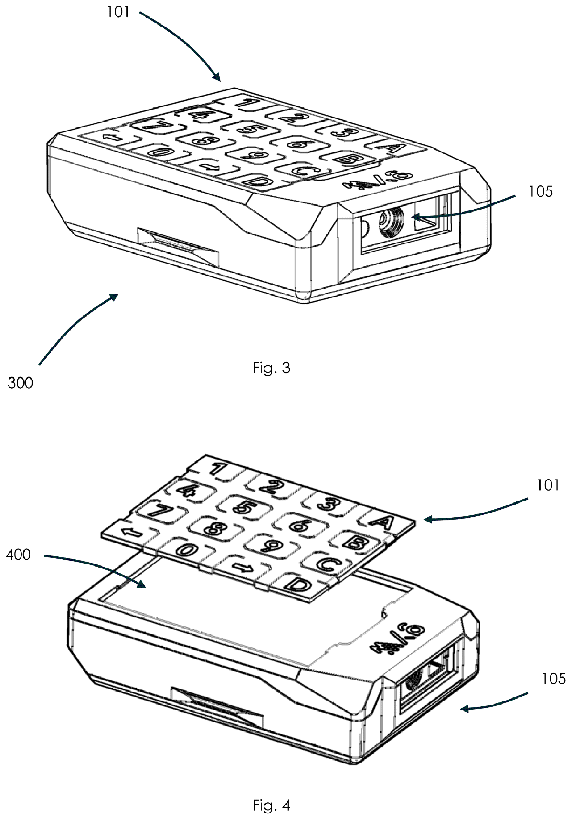

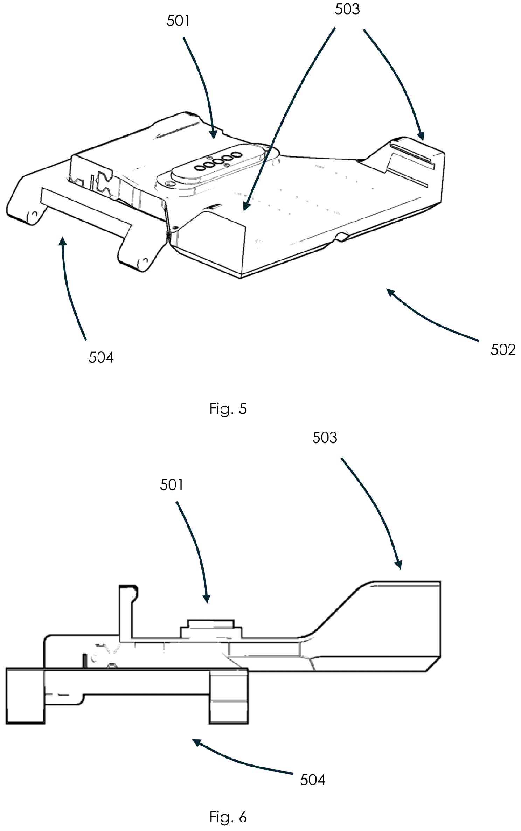

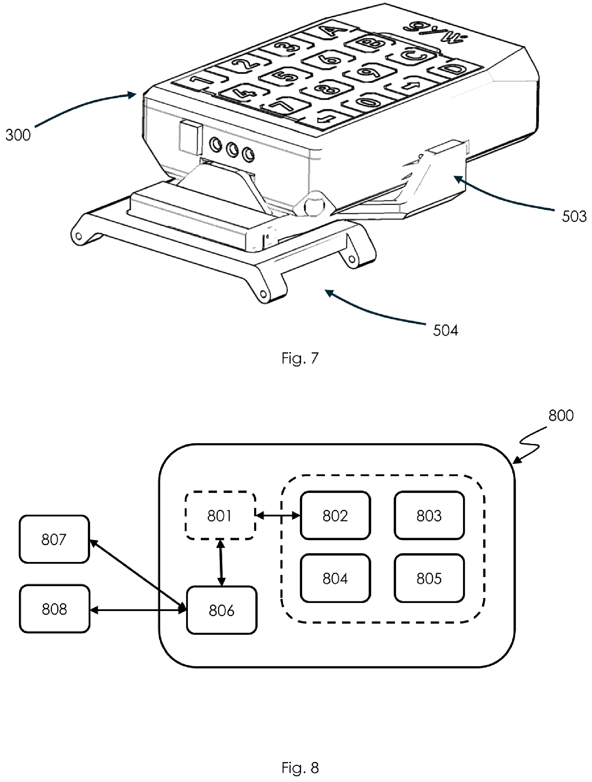

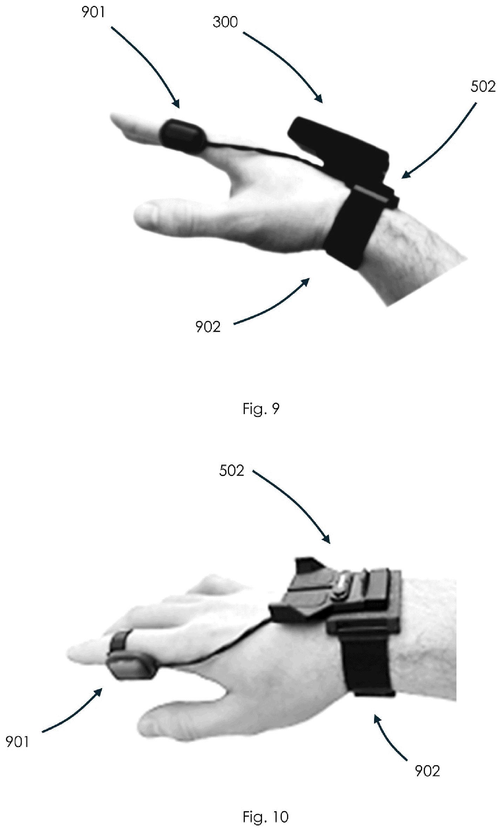

The invention will now be described in detail with reference to the accompanying drawings, which illustrate various embodiments of the programmable modular keypad system and its associated components. Figure 1 provides a perspective view of the stacked PCB architecture of the programmable modular keypad system, while Figure 2 presents a corresponding side view. Figures 3 and 4 illustrate different perspectives of the system, including an embodiment with a housed membrane keyboard and an alternative view where the membrane keyboard is positioned above the system. The invention further includes a support device, as shown in Figure 5, with a detailed side view provided in Figure 6. Figure 7 demonstrates how the modular keypad system is housed within the support device. In addition to the hardware components, Figure 8 outlines the software architecture of the programmable modular keypad system, detailing its functional interactions. Figures 9 and 10 illustrate an embodiment where the modular keypad system, secured by the support device with a strap, is worn on the user's wrist. These figures collectively provide a comprehensive understanding of the structural and functional aspects of the invention.

The device is specifically designed to be mounted directly on the operator's hand, with a key design constraint focused on minimizing its height to maintain the user's agility and ease of movement. To achieve this, a compact and ergonomic form factor is implemented, utilizing, for example, a 40×60 mm Printed Circuit Board (PCB). This compact size is made feasible through advanced PCB design techniques and high-density component assembly, ensuring that the device remains as unobtrusive as possible while still delivering the necessary functionalities required for industrial applications. The stacked PCB architecture as illustrated in Figure 1 and 2 further enhances flexibility, allowing for adaptability in terms of both form factor and ergonomics. The modular design enables the main PCB to remain consistent across different models, while the upper PCB, which houses the keyboard and NFC antenna, can be modified to accommodate specific operator requirements or adapt to varying work environments. This design approach ensures a balance between standardization and customization, facilitating seamless integration into diverse industrial workflows.

In addition to its core components, the system can also include a USB connection, allowing for seamless data transfer, device configuration, and power supply. This USB interface enhances the system's versatility, enabling it to be easily connected to external devices such as computers, industrial terminals, or charging stations. Furthermore, LED indicators can be integrated to provide real-time visual feedback on the device's status, such as power levels, data transmission activity, or scanning operations. These indicators enhance user experience by offering intuitive status monitoring, ensuring efficient operation in various industrial environments.

The system can optionally include an Inertial Measurement Unit (IMU) to detect and record the operator's movements. This sensor enables advanced functionalities such as gesture recognition or automated task triggering based on motion, enhancing hands-free interaction and efficiency in industrial environments. Additionally, the system may be equipped with internal flash and/or a micro-SD card slot, allowing for local data storage of activity logs, scanned information, or software updates. This feature provides greater flexibility in data management, enabling offline operation and reducing reliance on continuous cloud connectivity. Both the IMU and micro-SD card are optional enhancements, allowing the system to be configured according to specific application requirements.

To achieve this level of adaptability and functionality, the system is designed with a modular architecture comprising several key components. It includes a removable housing 100 that encases and protects the internal elements while allowing for easy maintenance and upgrades. A membrane keyboard 101 can be housed by the system, providing a responsive and durable user interface suitable for industrial environments. To enhance durability and safeguard internal components, a protective cover 102 is incorporated, shielding the device from external impacts, dust, and moisture. The system further features a modular keypad matrix 103, which allows for customization based on specific operational needs, ensuring versatility across various industrial applications. At the core of the system lies the PCB 104, as previously discussed, which serves as the primary electronic platform for processing user inputs and managing device functions. Additionally, a scanning module 105 is included, enabling data capture capabilities such as barcode or RFID scanning, further extending the device's utility in industrial and logistics settings. This combination of components ensures that the system is both adaptable and robust, meeting the demanding requirements of industrial operators while maintaining a compact and ergonomic form factor.

When fully assembled, the system forms a compact and ergonomic handheld device 300, with the membrane keyboard 101 securely housed within the structure. As illustrated in Figure 4, the membrane keyboard can also be removed from the slot 400 of the housing, offering flexibility for maintenance, replacement, or customization based on user requirements.

The system is designed to be equally functional for both right-handed and left-handed operators without requiring hardware modifications. This universal design reduces production complexity and costs while maintaining ergonomic efficiency. A key factor in achieving this adaptability is the support device as illustrated in Figures 5 and 6, which allows for secure and stable mounting on the operator's hand or wrist without adding unnecessary bulk, as illustrated in Figures 9 and 10. The support device is secured using side rails 503 that clips the keypad system. This clipping mechanism provides a quick and stable way to attach the support while ensuring a low-profile design that does not interfere with movement. The support can further be secured directly to the wrist using adjustable straps 902, similar to a watch, with holding means 504 suitable for a strap 902 to encircle a wearer's wrist. This strap-based attachment method ensures that the operator's hand remains free for tasks requiring precision, such as handling objects, driving a forklift, or opening packages. Additionally, by avoiding full-hand coverage, this configuration improves airflow and breathability, making it particularly beneficial in warm environments or during extended work periods.

To facilitate effortless operation, an activation button 901 for the 105 scanner is designed as a separate elastic band that wraps around one of the fingers. This placement enables the operator to trigger the scanner 105 with a simple finger flex, eliminating the need for a full glove while maintaining complete freedom of movement for the other fingers. This configuration enhances usability by ensuring natural and intuitive control, regardless of whether the device is worn on the left or right hand.

Furthermore, the support device comprises a receiver 501 for receiving to the connection module of the keypad system for making contact. These may further comprise a magnetic button, which activates the scanner, is symmetrically placed on the rear side of the device. This ensures a consistent distance from the finger-worn button, regardless of which hand is used, maintaining uniform functionality. Similarly, the power button is also located on the rear side for easy access, eliminating the need for separate configurations for different hand orientations.

The support device comprises a receiver 501 designed to accommodate the connection module of the keypad system, ensuring a secure and reliable interface for establishing contact. This receiver facilitates the seamless integration of the modular keypad system, allowing for efficient data and power transmission between the keypad and the support device. To enhance ease of use and ensure a quick and stable attachment, the receiver can further incorporate a magnetic button mechanism. This magnetic interface enables the keypad system to be effortlessly aligned and securely connected without requiring complex locking mechanisms or manual adjustments.

Finally, Figure 8 provides an overview of the software architecture of the programmable modular keypad system 800. At the core of the system, the processing unit 801 serves as the central controller, managing communication and operation across various functional modules. It coordinates with the power management module 802 to regulate energy consumption, the wireless communication module 803 to handle data transmission, the scanning module 804 for data capture, and the modular keypad matrix 805 for user input processing.

Additionally, the processing unit interfaces with the connection module 806, which extends the system's capabilities by enabling communication with an external input module 808 for auxiliary control inputs and a module for managing an external power source 807, ensuring efficient power distribution and alternative energy management. This interconnected architecture optimizes performance, ensuring seamless operation and expandability while maintaining flexibility for integration with various external peripherals.

It should be understood that the present invention is not limited to the described embodiments and that variations can be applied without going outside of the scope of the claims.

## Claims

1. A programmable modular keypad system (300) configured for integration with a traceability system to manage and enhance the traceability of items within an industrial logistics environment and item identification, the programmable keypad system (300) comprising:
- a housing (100) enclosing a printed circuit board, PCB, (104) operatively coupling modules via a processing unit (801), the modules comprising:
- a power management module (802) comprising an internal power source for autonomous operation and/or a power interface for connection to an external power source (807);
- a wireless communication module (803) configured to establish connectivity with the traceability system and/or other networked devices via wireless protocols;
- a scanning module (105, 804) configured to capture identification data associated with the items;
- the processing unit (801) configured to:
∘ process the identification data captured by the scanning module (105, 804);
∘ map the captured data to corresponding actions; and
∘ transmit the corresponding actions to the traceability system;
wherein the housing (100) further comprises:
- a modular keypad matrix (805) comprising a predefined number of customizable keys, each key configurable to perform programmable functions associated with the traceability system, the functions comprising interface functions, wireless communication functions, device control functions, and/or advanced operation functions.

2. The programmable modular keypad system (300) according to claim 1, wherein the housing (100) further comprises a slot (400) configured to accommodate a removable membrane keyboard (101) compatible with the modular keypad matrix (103).

3. The programmable modular keypad system (300) according to claim 2, wherein the slot (400) comprises a receiving surface designed to securely and reversibly attach the removable membrane keyboard (101).

4. The programmable modular keypad system (300) according to claim 2, wherein the slot comprises slide rails designed to guide and support the sliding insertion and removal of the removable membrane keyboard (101).

5. The programmable modular keypad system (300) according to any of the preceding claims, wherein the scanning module comprises an optical scanner (105) for capturing visible light.

6. The programmable modular keypad system according to any of the preceding claims, wherein the housing (100) further comprises a connection interface (806) positioned on a side opposite the modular keypad matrix (103), the connection interface being configured to securely and detachably attach to a support.

7. The programmable modular keypad system (300) according to claim 6, wherein the connection interface further comprises a connection module managed by the power management module (802) and configured to connect to an external power source (807).

8. The programmable modular keypad system (300) according to any of the claim 6 to 7, wherein the connection interface (806) further comprises a command input interface configured to receive one or more command signals from an external device (808, 901) when attached to the support.

9. The programmable modular keypad system (300) according to any of the claims 6 to 8, the connection interface (806) having a symmetrical geometry along at least one axis, wherein the symmetrical geometry enables attachment to the support in two opposite orientations, wherein the connection interface (806) maintains identical functionality in both orientations when attached.

10. A removeable membrane keyboard (101) comprising keys and configured to be housed by the programmable modular keypad system (300) according to any of the claims 2 to 9.

11. The removeable membrane keyboard (101) according to claim 10 further comprising a detection module configured to automatically recognize a keypad's orientation and layout during installation.

12. The removeable membrane keyboard (101) according to any of the claims 10 to 11 further configured to adjust the appearance of its keys in accordance with the settings of the customizable keys within the modular keypad matrix (103).

13. A support device for a wrist comprising:
- holding means (504) for a strap (902) to encircle a wearer's wrist and provide a secure fit;
- a support structure (503) mounted on the holding means (504) comprising a receiver (501) configured to establish a physical connection with the connection interface (806) of the programmable modular keypad system (300) according to any of the claims 6 to 8.

14. The support device according to claim 13, wherein the receiver (501) is further configured to interface with an external input module (902) adapted to operate in conjunction with the processing unit (801) of the programmable modular keypad system (300).

15. The support device according to claim 14, wherein the receiver (501) comprises a magnetic connector to interface with the external input device.

16. A kit of parts comprising a programmable modular keypad system (300) according to any of the claims 1 to 9, a removeable membrane keyboard (101) according to any of the claims 10 to 12, and a support device according to any of the claims 13 to 15.
